# EUROPEAN PATENT SPECIFICATION

(11) **EP 4 261 947 B1**
(45) Date of publication and mention of the grant of the patent: **23.09.2026**
(21) Application number: 22887723.9
(22) Date of filing: 28.10.2022
(51) Int. Cl.: H01M 4/62, C01B 32/378, H01M 4/36, H01M 4/38, H01M 10/052, H01M 4/02

(54) **METHOD FOR PREPARING A SULFUR-CARBON COMPOSITE**
VERFAHREN ZUR HERSTELLUNG EINES SCHWEFEL-KOHLENSTOFF-VERBUNDSTOFFS
PROCÉDÉ DE PRÉPARATION D'UN COMPOSITE SOUFRE-CARBONE

(30) Priority: 29.10.2021 KR 20210147386
(43) Date of publication of application: 18.10.2023
(73) Proprietor: LG Energy Solution, Ltd., Seoul 07335 (KR)
(72) Inventor: PARK, In-Tae, Daejeon 34122 (KR); SONG, Myeong-Jun, Daejeon 34122 (KR); KIM, Yong-Hwi, Daejeon 34122 (KR); PARK, Seong-Hyo, Daejeon 34122 (KR); LEE, Hyun-Soo, Daejeon 34122 (KR); CHOI, Ran, Daejeon 34122 (KR)
(74) Representative: Goddar, Heinz J.
(86) International application number: PCT/KR2022/016764
(87) International publication number: WO 2023/075528

(56) References cited:
- CN-A- 105 417 540
- CN-A- 109 037 662
- CN-A- 109 455 716
- JP-B2- 6 623 214
- KR-A- 20180 048 309
- KR-A- 20190 056 321
- KR-A- 20190 087 864
- KR-A- 20200 136 656
- KR-A- 20200 136 656
- CHIANG YU-CHUN ET AL: "Comprehensive approach to determining the physical properties of granular activated carbons", CHEMOSPHERE, vol. 37, no. 2, 24 July 1998 (1998-07-24), GB, pages 237 - 247, XP093337093, ISSN: 0045-6535, Retrieved from the Internet <URL:https://pdf.sciencedirectassets.com/271852/1-s2.0-S0045653500X00823/1-s2.0-S0045653598000423/main.pdf?hash=8c86659d3c5325a370038120ea64f84d6e15aee856cabb8122a20a36c1f019dd&host=68042c943591013ac2b2430a89b270f6af2c76d8dfd086a07176afe7c76c2c61&pii=S0045653598000423&tid=spdf-433bf1d5-91e1-41a4-a404-ab3> DOI: 10.1016/S0045-6535(98)00042-3
- LI BING ET AL: "Biomass-derived activated carbon/sulfur composites as cathode electrodes for Li-S batteries by reducing the oxygen content", RSC ADVANCES, vol. 10, no. 5, 1 January 2020 (2020-01-01), GB, pages 2823 - 2829, XP093337064, ISSN: 2046-2069, Retrieved from the Internet <URL:https://pubs.rsc.org/en/content/articlepdf/2020/ra/c9ra09610h> DOI: 10.1039/C9RA09610H
- RUSSELL B P ET AL: "Pore size distribution of BPL activated carbon determined by different methods", CARBON, ELSEVIER OXFORD, GB, vol. 32, no. 5, 1 January 1994 (1994-01-01), pages 845 - 855, XP024033142, ISSN: 0008-6223, [retrieved on 19940101], DOI: 10.1016/0008-6223(94)90041-8
- DU ZHENZHEN; XU JIN; JIN SONG; SHI YUCHEN; GUO CHENGKUN; KONG XIANGHUA; ZHU YANWU; JI HENGXING: "The correlation between carbon structures and electrochemical properties of sulfur/carbon composites for Li-S batteries", JOURNAL OF POWER SOURCES, vol. 341, 7 December 2016 (2016-12-07), AMSTERDAM, NL, pages 139 - 146, XP029863967, ISSN: 0378-7753, DOI: 10.1016/j.jpowsour.2016.11.102
- ZHU, Y. ; MURALI, S. ; STOLLER, M.D. ; VELAMAKANNI, A. ; PINER, R.D. ; RUOFF, R.S.: "Microwave assisted exfoliation and reduction of graphite oxide for ultracapacitors", CARBON, vol. 48, no. 7, 1 June 2010 (2010-06-01), GB , pages 2118 - 2122, XP026969601, ISSN: 0008-6223

## Description

### TECHNICAL FIELD

The present application claims priority to Korean Patent Application No. 10-2021-0147386 filed on October 29, 2021 in the Republic of Korea.

### BACKGROUND ART

A lithium-sulfur (Li-S) battery using a conventional catholyte system is problematic in that it depends on a catholyte type reaction through the formation of polysulfide as an intermediate product in the form of Li₂Sₓ, and thus cannot utilize a high theoretical discharge capacity (1675 mAh/g) of sulfur (S) sufficiently and causes degradation of battery life characteristics due to the elution of polysulfide.

Recently, a sparingly solvating electrolyte (SSE) system inhibiting the elution of polysulfide has been developed. Thus, it has been determined that application of a carbonaceous material having a high specific surface area of larger than 1,500 m²/g allows a utilization of 90% or more based on the theoretical capacity. However, in the case of such a carbonaceous material, it contains a relatively large amount of impurities, such as water, due to the high specific surface area, resulting in the problem of low utilization of the material. A method of increasing the temperature (use of an oven, etc.) according to the related art is problematic in that it requires a long time and has a difficulty in effective removal of impurities. CN109455716A discloses a method of purifying a carbonaceous material by microwave irradiation. Li et al, RSC Adv., 2020, 10, 2823, "Biomass-derived activated carbon/sulfur composites as cathode electrodes for Li-S batteries by reducing the oxygen content" discloses a carbon/sulfur composite for Li-S batteries with a purified carbon material.

### DISCLOSURE

### Technical Problem

The present disclosure is designed to solve the problems of the related art, and therefore the present disclosure is directed to providing a positive electrode active material for a battery system having a high energy density of 400 Wh/kg or more and 600 Wh/L or more by using a high-specific surface area carbonaceous material, and a method for preparing the same.

The present disclosure is also directed to providing a lithium-ion secondary battery including the positive electrode active material.

Also, it will be easily understood that these and other objects and advantages of the present disclosure may be realized by the means shown in the appended claims and combinations thereof.

### Technical Solution

The invention is disclosed in the appended claims.

### Advantageous Effects

The method according to the present invention can remove water and other impurities of a carbonaceous material effectively. Therefore, when using the sulfur-carbon composite obtained by the method as a positive electrode active material of a lithium-sulfur battery, it is possible to improve the sulfur supportability and over-voltage performance of the lithium-sulfur battery. It is also possible to reduce the initial irreversible capacity of the positive electrode active material and to improve the output characteristics and life characteristics.

### DESCRIPTION OF DRAWINGS

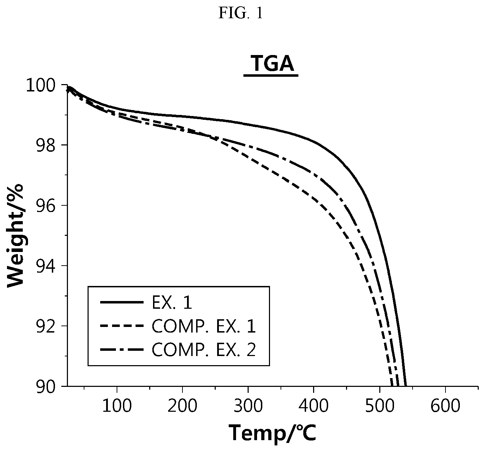

FIG. 1 is a graph illustrating the result of thermogravimetric analysis (TGA) of Example 1 according to the present disclosure and Comparative Examples 1 and 2.

### BEST MODE

Hereinafter, preferred embodiments of the present disclosure will be described in detail with reference to the accompanying drawings.

Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Throughout the specification, the expression 'a part includes or has an element' does not preclude the presence of any additional elements but means that the part may further include the other elements.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

As used herein, 'specific surface area' is determined by the BET method, and particularly, may be calculated from the nitrogen gas adsorption under a liquid nitrogen temperature (77K) by using BELSORP-mino II available from BEL Japan Co.

The term 'polysulfide' used herein has a concept covering both 'polysulfide ion (Sₓ²⁻, x = 8, 6, 4, 2)' and 'lithium polysulfide (Li₂Sₓ or LiSₓ⁻, wherein x = 8, 6, 4, 2)'.

As used herein, the term 'composite' means a material including a combination of two or more materials and realizing more effective functions, while forming physically/chemically different phases.

As used herein, the term 'porosity' means a ratio of volume occupied by pores based on the total volume of a structure, is expressed by the unit of %, and may be used interchangeably with the terms, such as pore ratio, porous degree, or the like.

According to the present disclosure, 'particle diameter D₅₀' means a particle size on the basis of 50% in the volume cumulative particle size distribution of a particle powder to be analyzed. The particle diameter, D₅₀, may be determined by using a laser diffraction method. For example, D₅₀ may be determined by dispersing a powder to be analyzed in a dispersion medium, introducing the resultant dispersion to a commercially available laser diffraction particle size analyzer (e.g. Microtrac S3500), irradiating ultrasonic waves of about 28 kHz at an output of 60 W to obtain a graph of volume cumulative particle size distribution, and then determining the particle size corresponding to 50% of the cumulative volume.

In addition, the size and thickness of each element shown in the drawings are depicted optionally for the purpose of convenience of description, and thus the scope of the present disclosure is not limited thereto. In the accompanying drawings, different layers and regions are shown with enlargement of thickness so that they may be identified clearly. Further, thicknesses of some layers and regions in the drawings may be exaggerated for the purpose of clearer description.

Further, throughout the specification, the expression 'a part includes an element' does not preclude the presence of any additional elements but means that the part may further include the other elements, unless otherwise stated.

The present disclosure relates to a method for preparing a sulfur-carbon composite for a positive electrode active material of an electrochemical device. The present disclosure also relates to a positive electrode including a sulfur-carbon composite obtained by the method. According to the present disclosure, the electrochemical device includes any device which carries out electrochemical reaction, and particular examples thereof include all types of primary batteries, secondary batteries, fuel cells, solar cells or capacitors, such as super capacitor devices. Particularly, the electrochemical device may be a secondary battery, and the secondary battery may be a lithium-ion secondary battery. For example, the lithium-ion secondary battery may be a lithium-metal battery, a lithium-sulfur battery, an all-solid-state battery, a lithium polymer battery, or the like, a lithium-sulfur battery being preferred.

According to the present disclosure, the positive electrode active material includes a sulfur-carbon composite, which includes a porous carbonaceous material.

Lithium-sulfur batteries have high discharge capacity and theoretical energy density among various secondary batteries, as well as abundant reserves and low price of sulfur used as a positive electrode active material can reduce the manufacturing cost of the batteries. In addition, such lithium-sulfur batteries have been spotlighted as next-generation secondary batteries by virtue of their eco-friendly advantages.

Since sulfur as a positive electrode active material in a lithium-sulfur battery is a non-conductor, a sulfur-carbon composite formed into a composite with a conductive carbonaceous material has been used generally in order to supplement low electrical conductivity.

However, in the case of a carbonaceous material used as a support of sulfur, it has a high specific surface area and contains a relatively large amount of impurities, such as water, and thus is problematic in that it shows low sulfur supporting efficiency and low utilization of material. According to the related art, use of a heating device, such as an oven, has been attempted, but such a pretreatment method based on heating requires a long time and has a difficulty in effective removal of impurities.

Under these circumstances, the present disclosure suggests a method for pretreating a carbonaceous material by using microwaves, wherein a value of MPPT is controlled to a specific range. When using a carbonaceous material pretreated by such a pretreatment method as a support of sulfur in a sulfur-carbon composite, the utilization of sulfur can be improved, and the capacity and life characteristics of a battery can be improved.

In one aspect of the present disclosure, there is provided a method for preparing a sulfur-carbon composite, including the steps of:
(S1) pretreating a porous carbonaceous material by using microwaves;
(S2) mixing the resultant product of step (S1) with sulfur; and
(S3) forming the resultant product of step (S2) into a composite,
   wherein step (S1) is controlled in such a manner that MPPT as defined by the following Formula 1 may have a value of larger than 30 and less than 3000: $MPPT \left(W*sec/g\right) = W x \left(S\div Wt\right)$
   (wherein W represents an output of microwaves, S represents an irradiation time (sec) of microwaves, and Wt represents a weight (g) of the carbonaceous material.)

According to the present disclosure, MPPT is a value of microwave energy applied to a unit carbonaceous material and is related with an effect of removing impurities. When MPPT is less than 30, it is not possible to obtain a sufficient effect of removing impurities. On the other hand, when MPPT is larger than 3000, the material may be ignited during the pretreatment, resulting in low safety.

Hereinafter, the method for preparing a sulfur-carbon composite according to the present disclosure will be explained in more detail.

First, a porous carbonaceous material is pretreated by using microwaves.

The carbonaceous material functions as a support providing a framework with which sulfur can be fixed uniformly and stably, and supplements the low electrical conductivity of sulfur to facilitate electrochemical reactions. Particularly, since a sulfur-carbon composite includes a carbonaceous material functioning as a support of sulfur, and the carbonaceous material has a large BET specific surface area and an adequate extent of diameter, it has a low irreversible capacity and high energy density, while showing a high sulfur loading amount. In other words, the sulfur-carbon composite has a structure capable of enhancing the utilization of sulfur during an electrochemical reaction.

In the sulfur-carbon composite according to the present disclosure, the carbonaceous material used as a support of sulfur may be prepared generally by carbonizing various carbonaceous precursors.

Such a carbonaceous material may include a plurality of irregular pores on the surface and inside thereof. According to an embodiment of the present disclosure, the carbonaceous material has a BET specific surface area of larger than 1600 m²/g. According to an embodiment of the present disclosure, the specific surface area may be 2000 m²/g or more. In addition, the diameter of pores contained in the carbonaceous material is preferably less than 10 nm.

Meanwhile, according to an embodiment of the present disclosure, the carbonaceous material may have a porosity of 50 vol% or more. Preferably, the porosity may be 60-80 vol%. When the porosity is less than 60 vol%, the effect of the pretreatment according to the present disclosure may be insufficient. When the porosity is larger than 80 vol%, it is more likely that a fire accident occurs during the pretreatment step.

In addition, according to an embodiment of the present disclosure, the carbonaceous material has a ratio of micropores having a diameter of 1 nm or less of 40 vol% or more based on 100 vol% of the total pores.

The carbonaceous material may have a spherical, rod-like, needle-like, sheet-like, tubular or bulky shape, and any carbonaceous material may be used with no particular limitation, as long as it is one used conventionally for a lithium-sulfur secondary battery.

The carbonaceous material may be any carbonaceous material having porous property and conductivity, as long as it is one used conventionally in the art. Particularly, the carbonaceous material may include at least one selected from the group consisting of graphite; graphene; carbon black, such as denka black, acetylene black, ketjen black, channel black, furnace black, lamp black, thermal black, or the like; carbon nanotubes (CNTs), such as single-walled carbon nanotubes (SWCNTs), multi-walled carbon nanotubes (MWCNTs), or the like; carbon fibers, such as graphite nanofibers (GNFs), carbon nanofibers (CNFs), activated carbon fibers (ACFs), or the like; graphite, such as natural graphite, artificial graphite, expanded graphite, or the like; carbon nanoribbons; carbon nanobelts, carbon nanorods and activated carbon. Preferably, the carbonaceous material may include activated carbon. According to an embodiment of the present, the carbonaceous material may include 95 wt% or more, preferably 99 wt% or more, of activated carbon based on 100 wt% of the carbonaceous material. For example, the carbonaceous material may include activated carbon alone.

Once the carbonaceous material is prepared as described above, it is disposed in a microwave irradiation device, and microwaves are irradiated thereto. Herein, microwave irradiation is controlled according to the MPPT value as defined by the following Formula 1, wherein MPPT is larger than 30 and less than 3000. $MPPT \left(W*sec/g\right) = W x \left(S\div Wt\right)$ (wherein W represents an output of microwaves, S represents an irradiation time (sec) of microwaves, and Wt represents a weight (g) of the carbonaceous material.)

According to Formula 1, the output and time of microwave irradiation depend on the weight of the carbonaceous material within a range controlled by a specific MPPT value.

When the microwave irradiation time is less than 5 seconds, the effect of pretreatment derived from microwave irradiation is insufficient. Therefore, according to an embodiment of the present disclosure, the irradiation time may be 5 seconds or more, preferably.

Meanwhile, according to an embodiment of the present disclosure, the carbonaceous material pretreated after step (S1) is mixed with sulfur preferably within 10 minutes. In addition, before the pretreated carbonaceous material is mixed with sulfur, it is maintained preferably under an inactive gas atmosphere. It is possible to prevent readsorption of impurities, such as water, by mixing the carbonaceous material rapidly with sulfur or by storing it under an inactive gas atmosphere. According to an embodiment of the present disclosure, the inactive gas may include at least one selected from N₂, helium, neon, argon, krypton, xenon and radon.

Meanwhile, according to an embodiment of the present disclosure, the output of microwaves may be 500-2000 W and may be controlled suitably within the above-defined range of MPPT.

Next, the pretreated carbonaceous material is mixed with sulfur, in step (S2).

The mixing in step (S2) is intended to increase the miscibility of sulfur with the carbonaceous material, and may be carried out by using an agitator, such as a mechanical milling device, used conventionally in the art. Herein, the mixing time and rate may be controlled selectively according to the content and composition of the ingredients. According to an embodiment, when carrying out the mixing, the weight ratio of sulfur to the porous carbonaceous material may be 5:5-9:1. When the content of sulfur is less than the above-defined range of weight ratio, the content of the porous carbonaceous material is increased, resulting in an increase in addition of a binder required for preparing a positive electrode slurry. Such an increase in addition of a binder causes an increase in the sheet resistance of an electrode and functions as an insulator that blocks electron pass, thereby causing degradation of the performance of a cell. On the other hand, when the content of sulfur is larger than the above-defined range of weight ratio, sulfur may agglomerate and hardly accept electrons, and thus has a difficulty in participating directly in the reaction at an electrode.

According to the present disclosure, since sulfur itself has no electrical conductivity, it is formed into a composite with the above-mentioned carbonaceous material to be used as a positive electrode active material. Herein, sulfur may be at least one selected from the group consisting of inorganic sulfur (S₈), Li₂Sₙ (n ≥ 1), 2,5-dimercapto-1,3,4-thiadiazole, disulfide compound, such as 1,3,5-trithiocyanuic acid, organic sulfur compound and carbon-sulfur polymer ((C₂Sₓ)ₙ, x = 2.5-50, n ≥ 2). Preferably, sulfur may include inorganic sulfur (S₈).

Then, the mixture of sulfur with carbon obtained from step (S2) is formed into a composite. The method for forming a composite is not particularly limited, and any method used conventionally in the art may be used. For example, methods used conventionally in the art, such as a dry composite formation or a wet composite formation (e.g. spray coating), may be used. For example, the mixture of sulfur with the carbonaceous material obtained after the mixing is pulverized through ball milling and is allowed to stand in an oven at 120-160°C for 20 minutes to 1 hour so that molten sulfur may be coated uniformly inside and on the external surface of the first carbonaceous material.

Since the sulfur-carbon composite obtained by the above-described method has a structure capable of providing a larger specific surface area, high sulfur loading amount and improved utilization of sulfur, it is possible to improve not only the electrochemical reactivity of sulfur but also the accessability and contactability of an electrolyte, and thus to improve the capacity and life characteristics of a battery.

In another aspect of the present disclosure, there is provided a sulfur-carbon composite obtained by the above-described method.

In the sulfur-carbon composite according to the present disclosure, sulfur may be positioned inside of the pores of the carbonaceous material and at least one outer surface of the carbonaceous material, wherein sulfur may be present in a region corresponding to less than 100%, preferably 1-95%, more preferably 60-90%, of the whole of the inner part and outer surface of the carbonaceous material. When sulfur is present on the surface of the carbonaceous material within the above-defined range, it is possible to realize the highest effect in terms of electron transfer area and wettability with an electrolyte. Particularly, within the above-defined range, the surface of the carbonaceous material is impregnated uniformly and thinly with sulfur. Therefore, it is possible to increase the electron transfer contact area during charge/discharge cycles. When sulfur is positioned on the whole surface of the carbonaceous material at a ratio of 100%, the carbonaceous material is totally covered with sulfur to cause degradation of wettability with an electrolyte and contactability with a conductive material contained in an electrode, and thus cannot accept electrons and cannot participate in the reaction.

The sulfur-carbon composite may be formed through simple mixing of sulfur with the carbonaceous material, or may be a coated composite having a core-shell structure or a supported composite. The coated composite having a core-shell structure is formed by coating one of sulfur and the carbonaceous material with the other of them. For example, the surface of the carbonaceous material may be surrounded with sulfur, or vice versa. In addition, the supported composite may be formed by packing sulfur inside of the carbonaceous material or in the pores of the carbonaceous material. According to the present disclosure, any type of the sulfur-carbon composite may be used with no particular limitation, as long as it satisfies the above-defined weight ratio of a sulfur-based compound to a carbonaceous material.

**In** still another aspect of the present disclosure, there is provided a positive electrode including the sulfur-carbon composite. The positive electrode incudes: a positive electrode current collector; and a positive electrode active material layer formed on at least one surface of the positive electrode current collector, wherein the positive electrode active material layer includes a positive electrode active material, a conductive material and a binder resin.

According to an embodiment of the present disclosure, the positive electrode active material may include the above-described sulfur-carbon composite in an amount of 50 wt% or more, 70 wt% or more, 90 wt% or more, or 95 wt% or more. According to an embodiment of the present disclosure, the positive electrode active material may include the sulfur-carbon composite alone.

According to an embodiment of the present disclosure, the positive electrode active material includes the above-described sulfur-carbon composite. According to an embodiment of the present disclosure, the positive electrode active material may include the sulfur-carbon composite in an amount of 70 wt% or more, or 90 wt% or more, based on 100 wt% of the total weight of the positive electrode active material. In addition, the positive electrode active material may further include at least one additive selected from transition metal elements, Group IIIA elements, Group IVA elements, sulfur compounds of those elements and alloys of sulfur with those elements, besides the sulfur-carbon composite.

According to an embodiment of the present disclosure, the positive electrode active material layer may include a lithium transition metal composite oxide represented by the following Chemical Formula 1:

[Chemical Formula 1] LiₐNi_{b}Co_{c}M¹_{d}M²ₑO₂

wherein M¹ represents Mn, Al or a combination thereof, and preferably may be Mn, or Mn and Al; and M² represents at least one selected from the group consisting of Zr, W, Y, Ba, Ca, Ti, Mg, Ta and Nb, preferably may be at least one selected from the group consisting of Zr, Y, Mg and Ti, and more preferably may be Zr, Y or a combination thereof. The element, M², is not essentially contained, but may function to accelerate grain growth during firing or to improve the crystal structure stability, when being contained in a suitable amount.

Meanwhile, the positive electrode current collector may include various positive electrode current collectors used in the art. Particular examples of the positive electrode current collector include stainless steel, aluminum, nickel, titanium, baked carbon, or aluminum or stainless steel surface-treated with carbon, nickel, titanium, silver, or the like. In general, the positive electrode current collector may have a thickness of 3-500 µm. In addition, the positive electrode current collector may have fine surface irregularities formed on the surface thereof to increase the adhesion of a positive electrode active material. For example, the positive electrode current collector may have various shapes, such as a film, a sheet, a foil, a net, a porous body, a foam or non-woven web body, or the like.

The conductive material is an ingredient for imparting conductivity to an electrode, and any material may be used with no particular limitation, as long as it has electron conductivity, while not causing any chemical change in the corresponding battery. Particular examples of the conductive material include: graphite, such as natural graphite or artificial graphite; carbonaceous material, such as carbon black, acetylene black, ketjen black, channel black, furnace black, lamp black, thermal black, carbon fibers, carbon nanotubes, or the like; metal powder or metal fibers, such as copper, nickel, aluminum, silver, or the like; conductive whisker, such as zinc oxide or potassium titanate; conductive metal oxide, such as titanium oxide; and conductive polymers, such as polyphenylene derivatives, and such conductive materials may be used alone or in combination. In general, the conductive material may be used in an amount of 1-30 wt%, preferably 1-20 wt%, and more preferably 1-10 wt%, based on the total weight of the positive electrode active material layer.

The binder is an ingredient functioning to improve the adhesion among the positive electrode active material particles and the adhesion between the positive electrode active material and the positive electrode current collector. Particular examples of the binder include polyvinylidene fluoride (PVDF), polyvinylidene fluoride-co-hexafluoropropylene (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated EPDM, styrene-butadiene rubber (SBR), fluoro-rubber, various copolymers, or the like, and such binders may be used alone or in combination. The binder may be used in an amount of 1-30 wt%, preferably 1-20 wt%, and more preferably 1-10 wt%, based on the total weight of the positive electrode active material layer.

The positive electrode may be obtained by a conventional method known to those skilled in the art.

According to an embodiment of the present disclosure, the positive electrode may be obtained as follows. First, the binder is dissolved in a solvent for preparing a slurry, and then the conductive material is dispersed therein. The solvent for preparing a slurry may be one capable of dispersing the positive electrode active material, the binder and the conductive material homogeneously and evaporating with ease, preferably. Typical examples of the solvent include acetonitrile, methanol, ethanol, tetrahydrofuran, water, isopropyl alcohol, or the like. Then, the positive electrode active material is dispersed homogeneously in the solvent containing the conductive material dispersed therein, optionally together with additives, thereby preparing a positive electrode slurry. The content of each of the solvent, positive electrode active material or optionally used additives is not significant in the present disclosure, and such ingredients may be used to provide a viscosity sufficient to facilitate coating of the slurry.

The prepared slurry is applied to a current collector and vacuum dried to form a positive electrode. The slurry may be coated on the current collector to an adequate thickness depending on the slurry viscosity and the thickness of a positive electrode to be formed.

The slurry may be coated by using a method generally known to those skilled in the art. For example, the positive electrode active material slurry is distributed on the top surface of one side of the positive electrode current collector and may be dispersed uniformly by using a doctor blade, or the like. In addition to this, the positive electrode active material slurry may be coated by using a die casting, a comma coating, a screen printing, or the like.

The slurry may be dried in a vacuum oven at 50-200°C for 1 day or less, but is not limited thereto.

In still another aspect of the present disclosure, there is provided a lithium-sulfur battery including an electrode assembly that includes the positive electrode including the above-described sulfur-carbon composite, and an electrolyte. The electrode assembly includes a positive electrode, a negative electrode and a separator interposed between the positive electrode and the negative electrode.

For example, the electrode assembly may have a stacked or stacked/folded structure formed by stacking a negative electrode and a positive electrode with a separator interposed therebetween, or may have a jelly-roll structure formed by winding the stack. **In** addition, when forming a jelly-roll structure, a separator may be further disposed at the outside to prevent the negative electrode and the positive electrode from being in contact with each other.

The negative electrode may include a negative electrode current collector; and a negative electrode active material layer formed on at least one surface of the negative electrode current collector, wherein the negative electrode active material layer includes a negative electrode active material, a conductive material and a binder.

Hereinafter, the negative electrode will be explained in more detail.

The negative electrode may have a structure including a negative electrode active material layer formed on one surface or both surfaces of an elongated sheet-like negative electrode current collector, wherein the negative electrode active material layer may include a negative electrode active material, a conductive material and a binder.

Particularly, the negative electrode may be obtained by applying a negative electrode slurry, prepared by dispersing a negative electrode active material, a conductive material and a binder in a solvent, such as dimethyl sulfoxide (DMSO), isopropyl alcohol, N-methyl pyrrolidone (NMP), acetone or water, to one surface or both surfaces of a negative electrode current collector, and removing the solvent of the negative electrode slurry through a drying process, followed by pressing. Meanwhile, when applying the negative electrode slurry, the negative electrode slurry may not be applied to a partial region of the negative electrode current collector, for example one end of the negative electrode current collector, to obtain a negative electrode including a non-coated portion.

The negative electrode active material may include a material capable of reversible lithium-ion (Li⁺) intercalation/deintercalation, a material capable of reacting with lithium ions to form a lithiated compound reversibly, lithium metal or lithium alloy. For example, the material capable of reversible lithium-ion intercalation/deintercalation may include crystalline carbon, amorphous carbon or a mixture thereof, and particular examples thereof may include artificial graphite, natural graphite, graphitized carbon fibers, amorphous carbon, soft carbon, hard carbon, or the like, but are not limited thereto. Particular examples of the material capable of reacting with lithium ions reversibly to form a lithiated compound may include tin oxide, titanium nitrate or a silicon-based compound. Particular example of the lithium alloy may include alloys of lithium (Li) with a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn). Preferably, the negative electrode active material may be lithium metal, particularly lithium metal foil or lithium metal powder. The silicon-based negative electrode active material may include Si, Si-Me alloy (wherein Me is at least one selected from the group consisting of Al, Sn, Mg, Cu, Fe, Pb, Zn, Mn, Cr, Ti and Ni), SiO_{y} (wherein 0 < y < 2), Si-C composite or a combination thereof, preferably SiO_{y} (wherein 0 < y < 2). Since the silicon-based negative electrode active material has a high theoretical capacity, use of such a silicon-based negative electrode active material can improve capacity characteristics.

The negative electrode current collector may include a negative electrode current collector used generally in the art. Particular examples of the negative electrode current collector include copper, stainless steel, aluminum, nickel, titanium, baked carbon, copper or stainless steel surface-treated with carbon, nickel, titanium, silver, aluminum-cadmium alloy, or the like. In general, the negative electrode current collector may have a thickness of 3-500 µm. In addition, similarly to the positive electrode current collector, the negative electrode current collector may have fine surface irregularities formed on the surface thereof to increase the binding force with the negative electrode active material. For example, the negative electrode current collector may have various shapes, such as a film, a sheet, a foil, a net, a porous body, a foam or non-woven web body, or the like.

The conductive material is an ingredient for imparting conductivity to the negative electrode, and any material may be used with no particular limitation, as long as it has electron conductivity, while not causing any chemical change in the corresponding battery. Particular examples of the conductive material include: graphite, such as natural graphite or artificial graphite; carbonaceous material, such as carbon black, acetylene black, ketjen black, channel black, furnace black, lamp black, thermal black, carbon fibers, carbon nanotubes, or the like; metal powder or metal fibers, such as copper, nickel, aluminum, silver, or the like; conductive whisker, such as zinc oxide or potassium titanate; conductive metal oxide, such as titanium oxide; and conductive polymers, such as polyphenylene derivatives, and such conductive materials may be used alone or in combination. In general, the conductive material may be used in an amount of 1-30 wt%, preferably 1-20 wt%, and more preferably 1-10 wt%, based on the total weight of the negative electrode active material layer.

The binder is an ingredient functioning to improve the adhesion among the negative electrode active material particles and the adhesion between the negative electrode active material and the negative electrode current collector. Particular examples of the binder include polyvinylidene fluoride (PVDF), polyvinylidene fluoride-co-hexafluoropropylene (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated EPDM, styrene-butadiene rubber (SBR), fluoro-rubber, various copolymers, or the like, and such binders may be used alone or in combination. The binder may be used in an amount of 1-30 wt%, preferably 1-20 wt%, and more preferably 1-10 wt%, based on the total weight of the negative electrode active material layer.

Meanwhile, the electrode assembly further includes a separator, which is disposed in the electrode assembly by interposing it between the negative electrode and the positive electrode. The separator functions to separate the negative electrode and the positive electrode from each other and to provide a lithium-ion channel, and any separator may be used with no particular limitation, as long as it is one used generally for a lithium secondary battery. Particular examples of the separator include a porous polymer film, such as a porous polymer film made of ethylene homopolymer, propylene homopolymer, ethylene/butene copolymer, ethylene/butene copolymer, ethylene/hexene copolymer, ethylene/methacrylate copolymer, or the like, or a laminated structure of two or more layers of such porous polymer films. In addition, a conventional porous non-woven web, such as a non-woven web made of high-melting point glass fibers, polyethylene terephthalate fibers, or the like, may be used. Further, in order to ensure heat resistance or mechanical strength, a coated separator containing a ceramic ingredient or a polymer material may be used.

In still another aspect of the present disclosure, there is provided an electrochemical device including the electrode assembly. In the electrochemical device, the electrode assembly is received in a battery casing together with an electrolyte. The battery casing may be any suitable battery casing, such as a pouch type or metallic can type battery casing, used conventionally in the art with no particular limitation.

The electrolyte used according to the present disclosure may include various electrolytes that may be used for a lithium secondary battery. Particular examples of the electrolyte may include, but are not limited to: an organic liquid electrolyte, an inorganic liquid electrolyte, a solid polymer electrolyte, a gel-like polymer electrolyte, a solid inorganic electrolyte, a molten type inorganic electrolyte, or the like.

Particularly, the electrolyte may include an organic solvent and a lithium salt.

The organic solvent is not particularly limited, as long as it can function as a medium through which ions participating in the electrochemical reactions of a battery can be transported. Particular examples of the organic solvent include, but are not limited to: ester-based solvents, such as methyl acetate, ethyl acetate, γ-butyrolactone and ε-caprolactone; ether-based solvents, such as dibutyl ether and tetrahydrofuran; ketone-based solvents, such as cyclohexanone; aromatic hydrocarbon-based solvents, such as benzene and fluorobenzene; carbonate-based solvents, such as dimethyl carbonate (DMC), diethyl carbonate (DEC), ethyl methyl carbonate (EMC), ethylene carbonate (EC) and propylene carbonate (PC); alcohol-based solvents, such as ethyl alcohol and isopropyl alcohol; nitrile-based solvents, such as R-CN (wherein R is a C2-C20 linear, branched or cyclic hydrocarbon group, which may optionally include a double bond, an aromatic ring or ether bond); amide-based solvents, such as dimethyl formamide; dioxolane-based solvents, such as 1,3-dioxolan; sulforane-based solvents, or the like.

Meanwhile, according to an embodiment of the present disclosure, the non-aqueous solvent of the electrolyte preferably includes an ether-based solvent with a view to enhancing the charge/discharge performance of a battery. Particular examples of such an ether-based solvent include a cyclic ether (e.g. 1,3-dioxolane, tetrahydrofuran, tetrohydropyran, or the like), linear ether compound (e.g., 1,2-dimethoxyethane), low-viscosity fluorinated ether, such as 1H,1H,2'H,3H-decafluorodipropyl ether, difluoromethyl 2,2,2-trifluoroethyl ether, 1,2,2,2-tetrafluoroethyl trifluoromethyl ether, 1,1,2,3,3,3-hexafluoropropyl difluoromethyl ether, 1H,1H,2'H,3H-decafluorodipropyl ether, pentafluoroethyl 2,2,2-trifluoroethyl ether, or 1H,1H,2'H-perfluorodipropyl ether, and such non-aqueous solvents may be used alone or in combination.

The lithium salt is not particularly limited, as long as it is a compound capable of providing lithium ions used in a lithium-ion secondary battery. Particular examples of the lithium salt include, but are not limited to: LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like. Such lithium salts may be used alone or in combination. For example, the lithium salt may be present in the electrolyte at a concentration of 0.1-3.0 M. When the concentration of the lithium salt falls within the above-defined range, the electrolyte has suitable conductivity and viscosity and shows excellent electrolyte quality, and thus lithium ions can be transported effectively.

Additives may be used optionally in order to improve the life characteristics of a battery, to inhibit degradation of the capacity of a battery and to improve the discharge capacity of a battery. Particular examples of the additives include, but are not limited to: haloalkylene carbonate-based compounds, such as difluoroethylene carbonate; pyridine; triethyl phosphite; triethanolamine; cyclic ethers; ethylene diamine; n-glyme; triamide hexamethyl phosphate; nitrobenzene derivatives; sulfur; quinonimine dyes; N-substituted oxazolidinone; N,N-substituted imidazolidine; ethylene glycol diallyl ether; ammonium salts; pyrrole; 2-methoxyethanol; aluminum trichloride, or the like. Such additives may be used alone or in combination. The additives may be used in an amount of 0.1-10 wt%, preferably 0.1-5 wt%, based on the total weight of the electrolyte.

There is no particular limitation in the shape of the lithium-sulfur battery. For example, the lithium-sulfur battery may have various shapes, including a cylindrical shape, a stacked shape, a coin-like shape, or the like.

In yet another aspect of the present disclosure, there is provided a battery module which includes the lithium-sulfur battery as a unit cell. The battery module may be used as a power source of middle- to large-scale devices requiring high-temperature stability, long cycle characteristics, high capacity characteristics, or the like.

Particular examples of the device include, but are not limited to: power tools driven by the power of an electric motor; electric cars, including electric vehicles (EVs), hybrid electric vehicles (HEVs), plug-in hybrid electric vehicles (PHEVs), or the like; electric two-wheeled vehicles, including E-bikes and E-scooters; electric golf carts; electric power storage systems; or the like.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### [Examples 1-3]

Activated carbon was introduced to a glass jar and purged with N₂ gas. Then, the activated carbon was transferred to a microwave irradiation system, and microwaves were irradiated thereto. Herein, the microwave output, the content of the carbonaceous material, the irradiation time and the MPPT value as defined by the above Formula 1 are shown in the following Table 1.

### [Comparative Examples 1 and 2]

Activated carbon was introduced to a glass jar and purged with N₂ gas. Then, the activated carbon was transferred to a microwave irradiation system, and microwaves were irradiated thereto. Herein, the microwave output, the content of the carbonaceous material, the irradiation time and the MPPT value as defined by the above Formula 1 are shown in the following Table 1.

### [Comparative Example 3]

Prepared was activated carbon not subjected to a pretreatment process.

### [Comparative Example 4]

Activated carbon was pretreated by allowing it to stand in an oven at 150°C for 2 hours.

**[Table 1]**

| | BET specific surface area (carbonaceous material m²/g) | Weight of carbonaceous material (g) | Irradiation output (w) | Irradiation time (sec) | MPPT value (w*sec/g) | Porosity of carbonaceous material (vol%) | Ratio of pores of 1 nm or less (based on total pore volume) (vol%) | Ratio of impurity removal |
|---|---|---|---|---|---|---|---|---|
| Ex. 1 | 3,000 | 15 | 10 | 47 | 31 | 76 | 49.4 | 6.0% |
| Ex. 2 | 2,000 | 15 | 300 | 15 | 300 | 66.7 | 71 | 6.9% |
| Ex. 3 | 3,000 | 15 | 1000 | 43 | 2900 | 76 | 49.4 | 6.9% |
| Comp. Ex. 1 | 3,000 | 15 | 10 | 43 | 29 | 76 | 49.4 | 2.9% |
| Comp. | 3,000 | 15 | 1000 | 47 | 3100 | 86 | 49.4 | - |
| Ex. 2 | | | | | | | | |
| Comp. Ex. 3 | 3,000 | 15 | | | - | | 49.4 | - |
| Comp. Ex. 4 | 3,000 | 15 | | | - | | 49.4 | 3.4% |

### Test Example 1: Result of Thermogravimetric Analysis

As can be seen from Table 1, Examples 1-3 show a ratio of impurity removal of 6% or more, which is higher as compared to Comparative Examples. In the case of Comparative Example 1, the ratio of impurity removal is as low as 2.9%. In addition, Comparative Example 2 shows an excessively high MPPT value to cause ignition during the pretreatment of the carbonaceous material. Meanwhile, in the case of Comparative Example 4 using simple heating treatment, the ratio of impurity removal is higher as compared to Comparative Example 1, but is lower as compared to the pretreatment method according to the present disclosure. FIG. 1 is a graph illustrating the thermogravimetric analysis (TGA) result of Example 1 and Comparative Examples 1 and 2. Meanwhile, after carrying out thermogravimetric analysis of the carbonaceous material, pretreated by the method of Example 3 and allowed to stand at room temperature for 10 minutes, the ratio of impurity removal is decreased to 5.0%. This is because impurities, such as water, is readsorbed rapidly due to the porous property of the carbonaceous material to cause a drop in the ratio of impurity removal. Therefore, it is preferred to mix the carbonaceous material rapidly with sulfur after the pretreatment in the method for manufacturing a sulfur-carbon composite according to the present disclosure.

Meanwhile, the ratio of impurity removal is calculated according to the mathematical formula of {(Weight before pretreatment - Weight after pretreatment) ÷ Weight before pretreatment} X 100 (%). Meanwhile, the thermogravimetric analysis is carried out by observing a change in the weight of the sample of each of Examples and Comparative Examples with a thermogravimetric analyzer (TGA, available from Metter Toledo), while warming the sample from 25°C to 900°C at a warming rate of 10°C/min.

## Claims

1. A method for preparing a sulfur-carbon composite for a positive electrode active material of an electrochemical device, comprising the steps of:
(S1) pretreating a porous carbonaceous material by using microwaves;
(S2) mixing the resultant product of step (S1) with sulfur; and
(S3) forming the resultant product of step (S2) into a composite,
wherein step (S1) is controlled in such a manner that MPPT as defined by the following Formula 1 has a value of larger than 30 and less than 3000: $MPPT \left(W*sec/g\right) = W x \left(S\div Wt\right)$
wherein W represents an output of microwaves (W), S represents an irradiation time (sec) of microwaves, and Wt represents a weight (g) of the porous carbonaceous material;
the porous carbonaceous material has a BET specific surface area of larger than 1,600 m²/g measured as set forth in the description; and
wherein step (S2) is carried out within 10 minutes after step (S1) is carried out.

2. The method for preparing a sulfur-carbon composite according to claim 1, wherein S (irradiation time of microwaves) is 5 seconds or more.

3. The method for preparing a sulfur-carbon composite according to claim 1, wherein the resultant product of step (S1) is stored under an inactive gas atmosphere before it is mixed with sulfur in step (S2).

4. The method for preparing a sulfur-carbon composite according to claim 3, wherein the inactive gas comprises at least one selected from N₂, helium, neon, argon, krypton, xenon and radon.

## Patentansprüche

1. Verfahren zur Herstellung eines Schwefel-Kohlenstoff-Verbundstoffs für ein Positivelektroden-Aktivmaterial einer elektrochemischen Vorrichtung, umfassend die Schritte:
(S1) Vorbehandeln eines porösen kohlenstoffhaltigen Materials unter Verwendung von Mikrowellen;
(S2) Mischen des resultierenden Produkts von Schritt (S1) mit Schwefel; und
(S3) Formen des resultierenden Produkts von Schritt (S2) zu einem Verbundstoff,
wobei Schritt (S1) derart gesteuert wird, dass MPPT, wie durch die folgende Formel 1 definiert, einen Wert von größer als 30 und kleiner als 3000 aufweist: $MPPT \left(W*sec/g\right) = W x \left(S\div Wt\right)$
wobei W eine Ausgabe von Mikrowellen (W) darstellt, S eine Bestrahlungszeit (sec) von Mikrowellen darstellt und Wt ein Gewicht (g) des porösen kohlenstoffhaltigen Materials darstellt;
das poröse kohlenstoffhaltige Material eine spezifische BET-Oberfläche von größer als 1.600 m² /g aufweist, gemessen wie in der Beschreibung dargelegt; und
wobei Schritt (S2) innerhalb von 10 Minuten nach der Durchführung von Schritt (S1) durchgeführt wird.

2. Verfahren zur Herstellung eines Schwefel-Kohlenstoff-Verbundstoffs nach Anspruch 1, wobei S (Bestrahlungszeit von Mikrowellen) 5 Sekunden oder mehr beträgt.

3. Verfahren zur Herstellung eines Schwefel-Kohlenstoff-Verbundstoffs nach Anspruch 1, wobei das resultierende Produkt von Schritt (S1) unter einer inaktiven Gasatmosphäre gelagert wird, bevor es in Schritt (S2) mit Schwefel gemischt wird.

4. Verfahren zur Herstellung eines Schwefel-Kohlenstoff-Verbundstoffs nach Anspruch 3, wobei das inaktive Gas mindestens eines, ausgewählt aus N₂, Helium, Neon, Argon, Krypton, Xenon und Radon, umfasst.

## Revendications

1. Procédé de préparation d'un composite soufre-carbone pour un matériau actif d'électrode positive d'un dispositif électrochimique, comprenant les étapes suivantes :
(S1) prétraitement d'un matériau carboné poreux en utilisant des micro-ondes ;
(S2) mélange du produit résultant de l'étape (S1) avec du soufre ; et
(S3) formation du produit résultant de l'étape (S2) en un composite,
l'étape (S1) étant régulée de sorte que la valeur du MPPT, définie par la formule 1 suivante, soit supérieure à 30 et inférieure à 3000 : $MPPT \left(W*sec/g\right) = W x \left(S\div Wt\right)$
W désignant une émission de micro-ondes (W), S désignant un temps de rayonnement (sec) des micro-ondes, et Wt désignant un poids (g) du matériau carboné poreux ;
la superficie spécifique BET du matériau carboné poreux étant supérieure à 1 600 m²/g mesurée de la façon indiquée dans la description ; et
l'étape (S2) étant réalisée dans les 10 minutes qui suivent l'exécution de l'étape (S1).

2. Procédé de préparation d'un composite soufre-carbone selon la revendication 1, S (temps de rayonnement des micro-ondes) étant 5 secondes ou davantage.

3. Procédé de préparation d'un composite soufre-carbone selon la revendication 1, le produit résultant de l'étape (S1) étant stocké sous une atmosphère gazeuse inactive avant d'être mélangé au soufre à l'étape (S2).

4. Procédé de préparation d'un composite soufre-carbone selon la revendication 3, le gaz inactif comprenant au moins un produit sélectionné parmi les suivants: N₂, hélium, néon, argon, krypton, xénon et radon.
